# EUROPEAN PATENT SPECIFICATION

(11) **EP 3 291 500 B1**
(45) Date of publication and mention of the grant of the patent: **13.05.2020**
(21) Application number: 16186222.2
(22) Date of filing: 30.08.2016
(51) Int. Cl.: H04L 29/06, H04L 29/08, G06F 21/60, G06F 21/64

(54) **DATA PROCESSING SYSTEM**
DATENVERARBEITUNGSSYSTEM
SYSTÈME DE TRAITEMENT DE DONNÉES

(43) Date of publication of application: 07.03.2018
(73) Proprietor: Siemens Aktiengesellschaft, 80333 München (DE)
(72) Inventor: Adler, Michael, 90469 Nürnberg (DE); Hofmann, Klaus-Peter, 91086 Aurachtal-Münchaurach (DE)
(74) Representative: Isarpatent

(56) References cited:
- EP-A1- 2 827 547
- WO-A1-2015/000967
- WO-A1-2015/153373
- US-A1- 2015 261 810

## Description

The present disclosure relates to a data processing system, and in particular to the storage of data in a data processing system which is arranged to interact with one or more field devices as may be used in the context of an Internet of Things architecture or in other contexts.

The "Internet of Things" (IoT) is a name for a known trend in information technology, which refers to various technologies and methods for devices to exchange data via the internet and other computer networks. Devices which exchange data may be provided with embedded electronic circuitry, software, sensors, actuators and communication devices providing network connectivity.

A typical IoT system comprises a data processing system which is arranged to receive and process data from a plurality of field devices. The data processing system may comprise a data centre and may be implemented as a cloud-based platform.

When a field device requests to connect to the processing system, the data processing system needs to decide whether to accept the connection, and whether to accept the data from the field device. For security reasons, but also to control costs and resource consumption, it is required to establish rules to deny certain devices to send data if that is not explicitly wanted.

In terms of security it is important for the data processing system to know certain aspects of the devices which send data, for example, whether the device that sends data is allowed to do so, whether the device is registered to a known tenant, whether the data that is sent is understandable to the data processing system for processing (for example by having a known data structure), whether the data can be interpreted (for example, whether the data semantics are known), whether the data is actually wanted to be stored, and so on.

There are some problems in relation to the processing of unknown devices, unknown data, or unknown data structures.

The normal approach is based on a simple authorization challenge, implementing a "yes or no" concept, whereby a field device is simply either permitted or denied to exchange data with the data processing system. This authorization decision is typically based on exchange of a secret such as a certificate, where the field device presents a secret to the data processing system that was formerly generated at the data processing system. When this is the case and the device gains access and can send data, the data is accepted. However, in some cases a device will not be known and yet it still may be desired to process its data. In that case, the data will be lost because the normal simple authorization challenge will reject the attempt immediately.

If a field device connection is accepted, there are still problems if its data cannot be processed or stored (for example, because the structure or semantics are unknown). Typically, errors are generated and the data is lost. This lacks a finer grained problem solving mechanism and the option to correct the problems before data is deleted.

In addition, this solution imposes a cost risk. If all the data is accepted and stored by the platform, this will cause operational cost (for example, additional storage resources required in a storage database which may be billed by units of gigabytes or similar). In environments such as legal environments where a customer needs to be aware of which costs he has to expect (e.g. within a month) there is a need for a solution that allows customers in advance to accept or deny the data that is sent by field devices. This is in contrast to classic pay-per-use models where the customer accepts that he simply has to pay the resources he consumed. In industrial IoT the matter is a bit different because the field devices may not be in full control of the customer, for example when they are serviced by third party companies.

Therefore, there is a need for a method and a system to address or ameliorate these and other problems.

The EP 2 827 548 A1 proposes a method for discovering the transmittal of privacy sensitive data in a computer network. The method involves that a user wishing to protect privacy sensitive data sends the data to a network node, which extracts a set of features from the data and stores the retrieved set of features in a database. The method further involves that a message sent via the network is scanned in order to extract a set of features and that the set of features is compared with the or each set of features in the database. Once there is a match between the features of the message and the features in the database the message is prevented from being further transmitted over the network.

The invention is defined in the independent claims.

According to a first aspect of the disclosure there is provided a data processing system comprising: a data verification system which is arranged to perform a validation check upon receipt of a request from a field device to transfer data to the data processing system; a data store; and a data landing zone; wherein the data verification system is arranged to pass the data associated with the request to the data store if the validation check is successful and to pass data related to the request to the data landing zone if the validation check is unsuccessful.

Optionally, the validation check comprises verifying whether the field device making the request is permitted to send data.

If the field device is not permitted to send data, the validation check fails and the data is sent to the data landing zone.

Optionally, the validation check comprises checking the integrity of the data associated with the request.

If the data fails the integrity check, the validation check fails and the data is sent to the data landing zone.

Optionally, the data verification system is arranged to check the integrity of the data associated with the request only after a field device is verified as being permitted to send data.

Optionally, the data landing zone comprises a data cleaning service arranged to modify the data so that it can pass the validation check of the data verification system.

Optionally, the data landing zone is arranged to pass data back to the data verification system once it is processed by the data cleaning service.

Optionally, the data cleaning service comprises work rules which can be applied to the data.

Optionally, the data landing zone comprises a user interface for modifying the data or the work rules.

Optionally, data stored in the data landing zone is purged after expiry of a predetermined time period.

According to a second aspect of the disclosure there is provided a method of processing data comprising: receiving a request from a field device to exchange data with a data processing system; performing a validation check on receipt of the request; passing data associated with the request to a data store if the validation check is successful and to passing data related to the request to a data landing zone if the validation check is unsuccessful.

Further aspects, features and advantages of the present invention will become apparent from the drawings and detailed description of the following preferred embodiments.

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: shows a known IoT (Internet of Things) data processing system;
- FIG 2: shows a data processing system according to the disclosure; and
- FIG 3: shows an example of an IoT data processing system according to an embodiment of the disclosure.

This disclosure provides a system that provides a fine granular mechanism to support platform operators and administrative users in managing unknown devices or unpredicted use cases or scenarios and to solve problems in this area in a managed way.

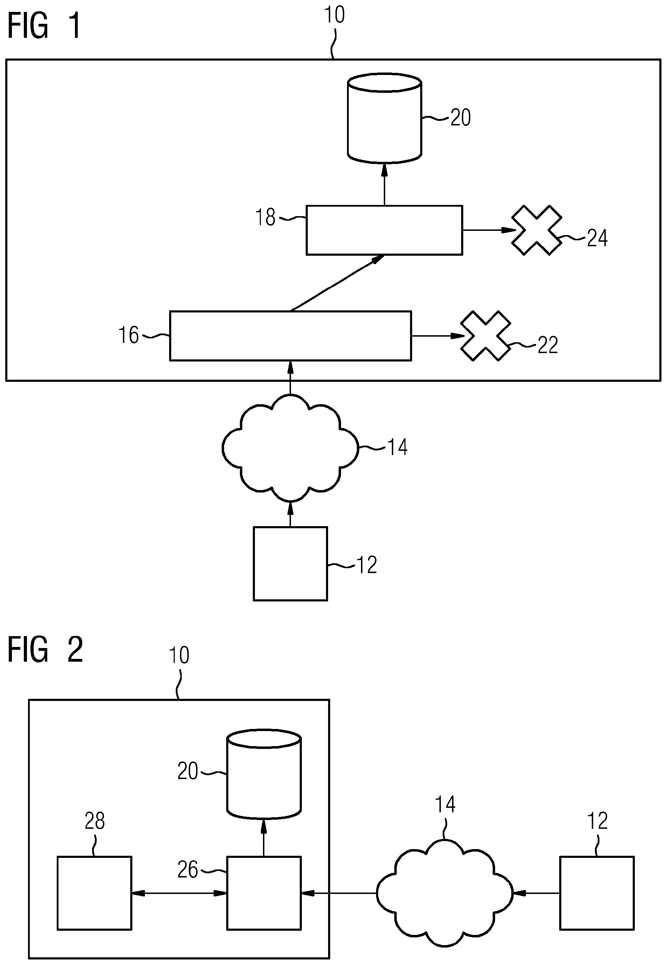

FIG 1 shows a known IoT (Internet of Things) system. A data processing system 10 is arranged to receive data from a field device 12 via a network 14 such as the internet. The data processing system 10 comprises various components and capabilities for receiving, processing and sending data. It may be implemented as a cloud-based data services platform.

The data processing system 10 provides a field device communication service 16 which accepts or rejects the connection from the field device 12. This service terminates the data transmission and is able to accept/interpret data sent using protocols such as HTTP, HTTPS, MQTT, CoAP, and extracts the actual data from the transported packages. The data is then provided to a data processing service 18 which is able to interpret the data (for example, knows its structure) and tries to write it to a data store 20 which may provide a persistent database or other structure for storing the data in memory.

Where services are referred to, it is to be understood that these may be implemented as modules which have appropriate hardware and software for carrying out the required functionality.

While only one field device 12 is illustrated, it is to be appreciated that there will normally be very many such devices in an IoT system.

In this system, there are various issues to be solved. The communication service 16 will ensure that it will only accept data from field devices 12 which were authorized to send data in an earlier stage. So there typically is a rule in place which defines if a field device 12 is known and authorized or not. If it is not, typically the data is purged (illustrated at 22) and an error log is written to indicate the problem to administrative users and operators.

Also, if the data cannot be interpreted by the data processing service 18, either because the data has an unknown structure or the semantics are unclear, it will be difficult to store the data permanently. As a result, in most cases the data will be purged (illustrated at 24) and an error log may be written to indicate the problem to administrative users and operators.

FIG 2 illustrates an improved data processing system 10 according to an embodiment of the disclosure. The data processing system 10 receives data from a field device 12 via a network 14 such as the internet. A data verification service 26 carries out checks before storing the data in a data store 20. As described above, the data verification service 26 may comprise modules which have appropriate hardware and software for carrying out the required functionality, and may alternatively be referred to as a data verification system. This data store 20 is preferably for storing data persistently, and it is desired to only store data which meets one or more criteria which are checked by the data verification service 26. If the data verification service 26finds that the data does not meet these criteria, the data is not stored in the data store 20 but is instead passed to a data landing zone 28.

The data landing zone 28 may simply store the relevant data for future reference, but in a preferred embodiment it may provide a data cleaning service or component which can modify the data so that it can pass the checks carried out by the data verification service 26. Once the data has been modified, it can be passed back from the landing zone 28 to the data verification service 26 which then validates the data and passes it to the data store 20.

The data cleaning service may include means for automatic or manual (human user) modification of data to comply with the relevant criteria.

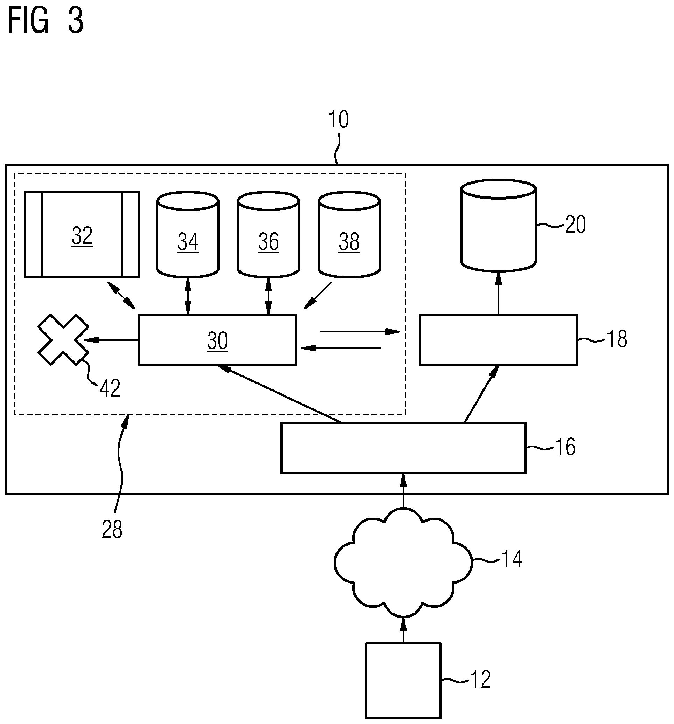

FIG 3 shows details of a further embodiment of a data processing system 10 according to the disclosure. Here, a data verification service 26 comprises a field device communication service 16 and a data processing service 18. These carry out checks in a similar fashion to that described above with reference to FIG 1, that is, the field device communication service 16 checks whether a field device 12 is permitted to send data. This will usually be by verifying if the field device 12 is known or not, by comparing a device identifier with a list of known devices. Alternatively, a field device 12 may be permitted to send data based on other criteria - for example, the field device 12 itself as identified by a MAC address or other unique identifier may not be known but the system may be set up to permit a certain class of field device 12 to transmit data, the class defining for example devices which are of a given type or made by a given manufacturer, and so on. If the request from a field device 12 fails this test, the data will not be sent onwards for regular processing but is instead passed to the data landing zone 28. If the request passes this test, it is passed to the data processing service 18.

The data processing service 18 then checks the data integrity. If the data fails the data integrity test, then it is not passed on to be stored in the data store 20 but is instead passed to the data landing zone 28. Checking data integrity can for example comprise verifying that the data complies with any one or more of required data format, structure or semantics.

The data landing zone 28 in this embodiment comprises a landing zone service 30, a landing zone user interface 32, a temporary data store 34, a metadata store 36, and a work rules store 38. It is possible for data in the data landing zone 28 to be purged (shown at 42).

The data landing zone 28 provides a way for administrative users (either platform operators or end-customer administrators) to have a chance to react to the incoming unknown, unauthorized or undefined data in a way that this data is not lost.

The landing zone service 30 is able to accept data from unknown devices and/or problematic data. So the field device communication service 16 and/or the data processing service 18 are able to provide the problematic data and associated metadata (for example, actual source device information, transport layer information, data processing problem information, and so on) to the data landing zone 28 (illustrated by the arrows originating at the field device communication service 16 and the data processing service 18 and pointing to the landing zone service 30). The data landing zone 28 comprises a business logic that is supported by a rule set (work rules store 38) that defines how to deal with the different problem scenarios. It so builds a flexible system that is able to adapt to different problem scenarios and so is not limited to the presented scenarios above.

The temporary data store 34 allows data from the problematic devices to be stored for a certain amount of time. The data is not interpreted here but only stored in the form it is received. The temporary data store 34 is used by and controlled by the landing zone service 30. Based on the work rules, the landing zone service 30 may keep the unprocessed data for a while. If the problems around this data are not solved in a configured time, the data may be purged as well (as shown at 42) .

The meta data store 36 keeps all information around the actual problem case. This may include but is not limited to: source device information, transport layer information, data processing problem information, time information, problem case status, problem case history and other. The meta data store 36 may be used by and controlled by the landing zone service 30. Every new problem case is managed by the landing zone service 30 and a new set of metadata is created. Based on the work rules, the landing zone service 30 may keep the metadata for a while. If the problems around this data are not solved in a configured time, the metadata may be purged (not shown).

The work rules store 38 keeps the actual rules to control the behavior of the landing zone service 30. This includes for example the maximum problem solving time before data is purged 42. It can be extended in a way that new rules can be introduced to handle new problem case types.

A user interface 32 can be provided to allow human users to solve the problem cases. Each problem case type may require a different workflow for problem resolving. So, the user interface component 32 can be extensible in a way that new workflows can be added for each problem type.

As an example: if an unknown or unauthorized field device 12 tries so send data to the data processing system 10, the problem resolving may require a manual process of device onboarding or device authorization. This will require interfaces from the user interface component to the platforms authorization and device management infrastructure (not shown on the picture).

In another case, e.g. when the data processing service cannot interpret the data because of missing data structure information, the user interface may require a work flow for defining the data model or semantics for this data. This will require interfaces from the user interface component 32 to the data processing system's or cloud platform's data modelling infrastructure (not shown on the picture). So, the user interface 32 may provide a management tool for the different required workflows to manage and resolve problem cases.

The present disclosure provides various advantages. An end user or platform operations administrator has a chance to correct problems with incoming devices 12 and data without losing the data. This gains much higher transparency for problematic devices 12 and data. Data that is collected in the field and which is not yet configured (e.g. data model) in the cloud is not lost immediately but can be recovered when the data model is configured within a given time span (illustrated by the arrow originating at the landing zone service 30 and pointing to the data processing service 18). At the same time, this is also an effective protection against malicious data. An end user also has better control over which data is stored and which is not.

Another positive side effect of this solution relates to the control of costs. Assuming that an end user has to pay platform usage based on the amount of stored data, the end user may need to be informed about the projected cost before data is inserted into the platform. In order to achieve this, the system of the present disclosure could implement a rule to place data into the data landing zone 28 until the end user was informed about the projected cost and he accepted the same, whereupon the data is transferred (by means of the landing zone service 30 and the data processing service 18) to the data store 20. This enables a cost-control feature.

Those skilled in the art will readily understand the invention can be applied not just to IoT applications but to other data processing systems where a central data store receives data from various devices.

In addition to the embodiments of the aspects of the present invention described above, those of skill in the art will be able to arrive at a variety of other arrangements and steps which, if not explicitly described in this document, nevertheless embody the principles of the invention and fall within the scope of the appended claims.

It should be understood that the logic code, programs, modules, processes, methods and the order in which the respective elements of each method are performed are purely exemplary. Depending on the implementation, they may be performed in any order or in parallel, unless indicated otherwise in the present disclosure. Further, the logic code is not related, or limited to any particular programming language, and may comprise one or more modules that execute on one or more processors in a distributed, non-distributed, or multiprocessing environment.

## Claims

1. A data processing system (10) comprising:
a) a data verification system (26) which is arranged to perform a validation check upon receipt of a request from a field device (12) to transfer data to the data processing system (10);
b) a data store (20) for only storing data persistently which meets one or more criteria which are checked by the data verification system (26); and
c) a data landing zone (28);
d) wherein the validation check comprises verifying whether the field device (12) making the request is permitted to send data;
e) wherein the data verification system (26) is arranged to pass the data associated with the request to the data store (20) if the validation check is successful and to pass data related to the request to the data landing zone (28) if the validation check is unsuccessful;
f) wherein the validation check comprises checking the integrity of the data associated with the request and checking whether the data associated with the request meets the one or more criteria;
g) wherein the data landing zone (28) comprises a data cleaning service arranged to modify the stored data so that it can pass the validation check of the data verification system (26) and for passing the modified data back to the data verification system (26) which then validates the modified data and passes it to the data store, wherein the data cleaning service is arranged to automatically or manually modify the stored data associated with the request to comply with the one or more criteria; and
h) wherein the data verification system (26) comprises a field device communication service (16) which is adapted to check whether the field device (12) is permitted to send data by verifying if the field device (12) is known or not by comparing a device identifier with a list of known devices.

2. The data processing system of claim 1, wherein the data verification system (26) is arranged to check the integrity of the data associated with the request only after a field device (12) is verified as being permitted to send data.

3. The data processing system (10) of claim 1, wherein the data cleaning service comprises work rules which can be applied to the data.

4. The data processing system (10) of claim 3, wherein the data landing zone (28) comprises a user interface (32) for modifying the data or the work rules.

5. The data processing system (10) of any preceding claim wherein data stored in the data landing zone (28) is purged after expiry of a predetermined time period.

6. A method of processing data comprising:
a) receiving a request from a field device (12) to exchange data with a data processing system (10);
b) performing a validation check on receipt of the request, wherein the validation check comprises verifying whether the field device (12) making the request is permitted to send data;
c) passing data associated with the request to a data store (20) if the validation check is successful and passing data related to the request to a data landing zone (28) if the validation check is unsuccessful, wherein the data store (20) is only for storing data persistently which meets one or more criteria which are checked by a data verification system (26); further comprising:
d) wherein the validation check comprises checking the integrity of the data associated with the request and checking whether the data associated with the request meets the one or more criteria;
g) wherein the data landing zone (28) comprises a data cleaning service arranged to modify the stored data so that it can pass the validation check of the data verification system (26) and for passing the modified data back to the verification service (26) which then validates the modified data and passes it to the data store, wherein the data cleaning service is arranged to automatically or manually modify the data associated with the request to comply with the one or more criteria; and
h) wherein the data verification system (26) comprises a field device communication service (16) which is adapted to check whether the field device (12) is permitted to send data by verifying if the field device (12) is known or not by comparing a device identifier with a list of known devices.

## Patentansprüche

1. Datenverarbeitungssystem (10), das Folgendes umfasst:
a) ein Datenverifikationssystem (26), das dafür ausgelegt ist, eine Validierungsüberprüfung beim Empfang einer Anforderung von einem Feldgerät (12), Daten an das Datenverarbeitungssystem (10) zu übertragen, durchzuführen;
b) einen Datenspeicher (20) nur zum permanenten Speichern von Daten, die ein oder mehrere Kriterien, die durch das Datenverifikationssystem (26) überprüft werden, erfüllen, und
c) einen Datenauffangbereich (28);
d) wobei die Validierungsüberprüfung das Verifizieren umfasst, ob dem Feldgerät (12), welches die Anforderung macht, erlaubt ist, Daten zu senden;
e) wobei das Datenverifikationssystem (26) dafür ausgelegt ist, die Daten, die der Anforderung zugeordnet sind, an den Datenspeicher (20) zu leiten, falls die Validierungsüberprüfung erfolgreich ist, und Daten bezüglich der Anforderung an den Datenauffangbereich (28) zu leiten, falls die Validierungsüberprüfung nicht erfolgreich ist;
f) wobei die Validierungsüberprüfung das Überprüfen der Integrität der Daten, die der Anforderung zugeordnet sind, und das Überprüfen, ob die Daten, die der Anforderung zugeordnet sind, das eine oder die mehreren Kriterien erfüllen, umfasst;
g) wobei der Datenauffangbereich (28) einen Datensäuberungsdienst umfasst, der dafür ausgelegt ist, die gespeicherten Daten so zu modifizieren, dass sie die Validierungsüberprüfung des Datenverifikationssystems (26) bestehen können, und der die modifizierten Daten an das Datenverifikationssystem (26) zurückleitet, das dann die modifizierten Daten validiert und sie zu dem Datenspeicher leitet, wobei der Datensäuberungsdienst dafür ausgelegt ist, die gespeicherten Daten, die der Anforderung zugeordnet sind, automatisch oder manuell zu modifizieren, um dem einen oder den mehreren Kriterien zu entsprechen, und
h) wobei das Datenverifikationssystem (26) einen Feldgerätekommunikationsdienst (16) umfasst, der dafür ausgelegt ist, zu überprüfen, ob dem Feldgerät (12) erlaubt ist, Daten zu senden, indem verifiziert wird, ob das Feldgerät (12) bekannt ist oder nicht, indem eine Vorrichtungskennung mit einer Liste von bekannten Vorrichtungen verglichen wird.

2. Datenverarbeitungssystem nach Anspruch 1, wobei das Datenverifikationssystem (26) dafür ausgelegt ist, die Integrität der Daten, die der Anforderung zugeordnet sind, nur zu überprüfen, nachdem verifiziert worden ist, dass einem Feldgerät (12) erlaubt ist, Daten zu senden.

3. Datenverarbeitungssystem (10) nach Anspruch 1, wobei der Datensäuberungsdienst Arbeitsregeln umfasst, die auf die Daten angewendet werden können.

4. Datenverarbeitungssystem (10) nach Anspruch 3, wobei der Datenauffangbereich (28) eine Anwenderschnittstelle (32) zum Modifizieren der Daten oder der Arbeitsregeln umfasst.

5. Datenverarbeitungssystem (10) nach einem der vorhergehenden Ansprüche, wobei Daten, die in dem Datenauffangbereich (28) gespeichert sind, nach dem Ablauf einer vorbestimmten Zeitdauer gelöscht werden.

6. Verfahren zum Verarbeiten von Daten, das Folgendes umfasst:
a) Empfangen einer Anforderung von einem Feldgerät (12), um Daten mit einem Datenverarbeitungssystem (10) auszutauschen;
b) Durchführen einer Validierungsüberprüfung beim Empfang der Anforderung, wobei die Validierungsüberprüfung das Verifizieren umfasst, ob dem Feldgerät (12), welches die Anforderung macht, erlaubt ist, Daten zu senden;
c) Leiten von Daten, die der Anforderung zugeordnet sind, an einen Datenspeicher (20), falls die Validierungsüberprüfung erfolgreich ist, und Leiten von Daten bezüglich der Anforderung an einen Datenauffangbereich (28), falls die Validierungsüberprüfung nicht erfolgreich ist, wobei der Datenspeicher (20) nur zum permanenten Speichern von Daten, die ein oder mehrere Kriterien, die durch ein Datenverifikationssystem (26) überprüft werden, erfüllen, ist;
das ferner Folgendes umfasst:
d) wobei die Validierungsüberprüfung das Überprüfen der Integrität der Daten, die der Anforderung zugeordnet sind, und das Überprüfen, ob die Daten, die der Anforderung zugeordnet sind, das eine oder die mehreren Kriterien erfüllen, umfasst,
g) wobei der Datenauffangbereich (28) einen Datensäuberungsdienst umfasst, der dafür ausgelegt ist, die gespeicherten Daten so zu modifizieren, dass sie die Validierungsüberprüfung des Datenverifikationssystems (26) bestehen können, und der die modifizierten Daten an den Verifikationsdienst (26) zurückleitet, der dann die modifizierten Daten validiert und sie zu dem Datenspeicher leitet, wobei der Datensäuberungsdienst dafür ausgelegt ist, die Daten, die der Anforderung zugeordnet sind, automatisch oder manuell zu modifizieren, um dem einen oder den mehreren Kriterien zu entsprechen, und
h) wobei das Datenverifikationssystem (26) einen Feldgerätekommunikationsdienst (16) umfasst, der dafür ausgelegt ist, zu überprüfen, ob dem Feldgerät (12) erlaubt ist, Daten zu senden, indem verifiziert wird, ob das Feldgerät (12) bekannt ist oder nicht, indem eine Vorrichtungskennung mit einer Liste von bekannten Vorrichtungen verglichen wird.

## Revendications

1. Système de traitement de données (10), comprenant :
a) un système de vérification de données (26) qui est conçu pour réaliser un contrôle de validation à la réception, en provenance d'un dispositif in situ (12), d'une demande de transfert de données vers le système de traitement de données (10) ;
b) un magasin de données (20) pour stocker de manière persistante uniquement des données qui satisfont à un ou plusieurs critères qui sont contrôlés par le système de vérification de données (26) ; et
c) une zone de pose de données (28) ;
d) le contrôle de validation consistant à vérifier si le dispositif in situ (12) à l'origine de la demande est autorisé à envoyer des données ;
e) le système de vérification de données (26) étant conçu pour transmettre les données associées à la demande au magasin de données (20) si le contrôle de validation est satisfaisant et pour transmettre les données relatives à la demande à la zone de pose de données (28) si le contrôle de validation n'est pas satisfaisant ;
f) le contrôle de validation consistant à contrôler l'intégrité des données associées à la demande et à contrôler si les données associées à la demande satisfont au ou aux critères ;
g) la zone de pose de données (28) comprenant un service de nettoyage de données pour modifier les données stockées de sorte qu'elles puissent passer le contrôle de validation du système de vérification de données (26) et pour retransmettre les données modifiées au système de vérification de données (26) qui valide ensuite les données modifiées et les transmet au magasin de données, le service de nettoyage de données étant conçu pour modifier automatiquement ou manuellement les données stockées associées à la demande pour les rendre conformes au ou aux critères ; et
h) le système de vérification de données (26) comprenant un service de communication de dispositif in situ (16) qui est conçu pour contrôler si le dispositif in situ (12) est autorisé à envoyer des données en vérifiant si le dispositif in situ (12) est connu ou non en comparant un identifiant de dispositif à une liste de dispositifs connus.

2. Système de traitement de données selon la revendication 1, dans lequel le système de vérification de données (26) est conçu pour contrôler l'intégrité des données associées à la demande uniquement après qu'il a été vérifié qu'un dispositif in situ (12) est autorisé à envoyer des données.

3. Système de traitement de données (10) selon la revendication 1, dans lequel le service de nettoyage de données comprend des règles de travail qui peuvent être appliquées aux données.

4. Système de traitement de données (10) selon la revendication 3, dans lequel la zone de pose de données (28) comprend une interface d'utilisateur (32) pour modifier les données ou les règles de travail.

5. Système de traitement de données (10) selon l'une quelconque des revendications précédentes, dans lequel les données stockées dans la zone de pose de données (28) sont purgées après l'expiration d'une période de temps prédéterminée.

6. Procédé de traitement de données, consistant à :
a) recevoir, en provenance d'un dispositif in situ (12), une demande d'échange de données avec un système de traitement de données (10) ;
b) réaliser un contrôle de validation à la réception de la demande, le contrôle de validation consistant à vérifier si le dispositif in situ (12) à l'origine de la demande est autorisé à envoyer des données ;
c) transmettre les données associées à la demande à un magasin de données (20) si le contrôle de validation est satisfaisant et transmettre les données relatives à la demande à une zone de pose de données (28) si le contrôle de validation n'est pas satisfaisant, le magasin de données (20) servant à stocker de manière persistante uniquement des données qui satisfont à un ou plusieurs critères qui sont contrôlés par un système de vérification de données (26) ;
et dans lequel en outre :
d) le contrôle de validation consiste à contrôler l'intégrité des données associées à la demande et à contrôler si les données associées à la demande satisfont au ou aux critères ;
g) la zone de pose de données (28) comprend un service de nettoyage de données pour modifier les données stockées de sorte qu'elles puissent passer le contrôle de validation du système de vérification de données (26) et pour retransmettre les données modifiées au service de vérification (26) qui valide ensuite les données modifiées et les transmet au magasin de données, le service de nettoyage de données étant conçu pour modifier automatiquement ou manuellement les données associées à la demande pour les rendre conformes au ou aux critères ; et
h) le système de vérification de données (26) comprend un service de communication de dispositif in situ (16) qui est conçu pour contrôler si le dispositif in situ (12) est autorisé à envoyer des données en vérifiant si le dispositif in situ (12) est connu ou non en comparant un identifiant de dispositif à une liste de dispositifs connus.
